# EUROPÄISCHE PATENTANMELDUNG

(11) **EP 4 847 802 A1**
(43) Veröffentlichungstag der Anmeldung: **02.12.2026**
(21) Anmeldenummer: 25179400.4
(22) Anmeldetag: 28.05.2025
(51) Int. Cl.: F16H 57/029, E21B 15/00, F16H 57/031, F16P 1/02, F16H 1/06

(54) **ZAHNKRANZANORDNUNG, INSBESONDERE FÜR EINE BAUMASCHINE**

(71) Anmelder: BAUER Maschinen GmbH, 86529 Schrobenhausen (DE)
(72) Erfinder: Shevtsov, Dimitri, 86157 Augsburg (DE)
(74) Vertreter: Wunderlich & Heim Patentanwälte PartG mbB

(57) **Zusammenfassung**

Die Erfindung betrifft eine Zahnkranzanordnung, insbesondere für eine Baumaschine, mit einem bogenförmigen Zahnkranz mit außenliegenden Zähnen und mindestens einem Zahnrad, welches um eine Zahnradmittenachse drehbar ist und mit dem Zahnkranz in kämmenden Eingriff steht. Nach der Erfindung ist vorgesehen, dass ein flexibles, längliches Abdeckelement auf dem Zahnkranz entlang den außenliegenden Zähnen angeordnet ist und dass im Bereich des kämmenden Zahnrades das flexible Abdeckelement um das mindestens eine Zahnrad herum geführt ist.

## Beschreibung

Die Erfindung betrifft eine Zahnkranzanordnung, insbesondere für eine Baumaschine, mit einem bogenförmigen Zahnkranz mit außenliegenden Zähnen und mindestens einem Zahnrad, welches um eine Zahnradmittenachse drehbar ist und mit dem Zahnkranz in kämmenden Eingriff steht, gemäß dem Oberbegriff des Anspruchs 1.

Derartige Zahnkranzanordnungen mit offenen Zahnkränzen werden oftmals im Baumaschinenbereich eingesetzt, um etwa einen Oberwagen gegenüber einem Unterwagen mittels eines Schwenkgetriebes zu verdrehen. Bekannte Beispiele für solche Zahnkranzanordnungen sind etwa bei Löffelbaggern, Bau- oder Mobilkränen sowie Bohr- oder Rammgeräten gegeben. Ein Einbauort zwischen Oberwagen und Unterwagen ist meist nur schwer zugänglich. Bei teilweise oder weitgehend verdeckten Zahnkranzanordnungen ist ein Schutz gegen Verschmutzung oder Spritzwasser zwar nicht unwesentlich, jedoch von untergeordneter Bedeutung.

Zahnkranzanordnungen mit offenen Zahnkränzen stellen eine grundsätzliche Verletzungsgefahr für Personen dar. Wo es sinnvoll und möglich ist, wird eine derartige Verzahnung in der Regel im Inneren einer Drehverbindung ausgeführt. Verzahnungen, die nach außen gerichtet sind, werden, soweit sinnvoll und möglich, komplett eingehaust.

Bei einer Einhausung einer Zahnkranzanordnung mit Gehäuseteilen besteht das Problem, dass für Wartungs- und Inspektionsarbeiten, insbesondere für ein Schmieren, eine Demontage des Abdeckgehäuses notwendig ist. Zudem kann ein Gehäuse einen zusätzlichen Bauraum in Anspruch nehmen, welcher bei bestimmten Anwendungsfällen nicht gegeben ist oder benötigten Bauraum für andere Komponenten beschränkt.

Der Erfindung liegt die **Aufgabe** zugrunde, eine Zahnkranzanordnung anzugeben, bei welcher eine sichere und kompakte Abdeckung zum Schutz vor Verschmutzung und Verletzung gegeben ist.

Nach der Erfindung wird die Aufgabe durch eine Zahnkranzanordnung mit den Merkmalen des Anspruchs 1 gelöst. Bevorzugte Ausführungsformen der Erfindung sind in den abhängigen Ansprüchen angegeben.

Erfindungsgemäß ist vorgesehen, dass ein flexibles, längliches Abdeckelement auf dem Zahnkranz entlang den außenliegenden Zähnen angeordnet ist und dass im Bereich des kämmenden Zahnrades das flexible Abdeckelement um das mindestens eine Zahnrad herum geführt ist.

Ein Grundgedanke der Erfindung liegt darin, den Zahnkranz mit einem flexiblen, länglichen Abdeckelement abzudecken, welches sich entlang der Zähne des Zahnkranzes erstreckt. Im Bereich des mit dem Zahnkranz kämmenden Zahnrades wird das Abdeckelement von dem Zahnkranz weg und um das kämmende Zahnrad herumgeführt. Anschließend kann das Abdeckelement wieder entlang des Zahnkranzes verlaufen.

Das flexible Abdeckelement kann insbesondere mittels einer Führungseinrichtung um das Zahnrad herumgeführt sein, welches mit dem mindestens einen kämmenden Zahnrad relativ entlang des Zahnkranzes bewegbar ist. Insbesondere bei einem Verschwenken des Zahnkranzes gegenüber dem damit kämmenden Zahnrad kann sich das flexible Abdeckelement entsprechend anpassen und die Zahnkranzabschnitte neben der Eingriffsstelle zwischen dem mindestens einen Zahnrad und dem Zahnkranz zuverlässig abdecken. Dies schützt den Zahnkranz und das mindestens eine Zahnrad und beugt so der Gefahr von Verletzungen für Bedienpersonal und einer Verschmutzung der Verzahnungen vor. Durch die Flexibilität und Anpassbarkeit des Abdeckelementes kann dies erreicht werden, ohne dass ein unnötig großer Bauraum durch das Abdeckelement belegt wird.

Eine besonders kompakte Ausgestaltung der Erfindung ergibt sich nach einer Ausführungsform dadurch, dass das flexible Abdeckelement an den außenliegenden Zähnen des Zahnkranzes aufliegt und daran mit einer bestimmten Anlagekraft angedrückt ist. Das flexible Abdeckelement kann so unmittelbar in Kontakt mit den nach außen gerichteten Zähnen des Zahnkranzes stehen und insbesondere an deren Zahnköpfen angelegt sein. Dies kann dadurch erzielt werden, dass das Abdeckelement derart ausgebildet und angeordnet ist, dass dieses gespannt und mit einer gewissen Anlagekraft an die Zähne des Zahnkranzes angedrückt ist. Alternativ oder ergänzend können ein oder mehrere Halteelemente entlang des Zahnkranzes angeordnet sein, um das Abdeckelement in einer gewünschten Anlageposition zu halten.

Eine besonders bevorzugte Ausführungsform besteht nach der Erfindung darin, dass das flexible Abdeckelement elastisch, insbesondere aus oder mit einem elastischen Kunststoffmaterial, gebildet ist. Das flexible Abdeckelement kann insbesondere aus oder mit einem gummiartigen oder gummiähnlichen Kunststoffmaterial bestehen. Hierdurch lässt sich eine gewisse Spannung des flexiblen Abdeckelementes einstellen, wodurch dieses zuverlässig an den Zahnköpfen der Zähne des Zahnkranzes anliegen kann.

Eine besonders bevorzugte Ausführungsform besteht zudem darin, dass das flexible Abdeckelement als ein durchgehendes Band oder ein Band mit gelenkigen Bandgliedern gebildet ist. Das Abdeckelement kann beispielsweise ein Band aus einem elastischen Kunststoffmaterial oder einer Kombination von verschiedenen Materialien mit Kunststoff sein, etwa einem textilen Trägergewebe mit einer Kunststoffbeschichtung. Alternativ kann das Abdeckelement als ein Band mit gelenkigen Bandgliedern, ähnlich einer Gliederkette oder eines Gliederbandes, sein. Die einzelnen Bandglieder, welche aus einem starren Material, etwa aus Metall oder Kunststoff gebildet sein können, können über Gelenkverbindungen miteinander verbunden sein, so dass hierdurch ein besonders langlebiges flexibles Abdeckelement gebildet wird.

Abhängig vom jeweiligen Anwendungsfall kann der Zahnkranz nach einer Weiterbildung der Erfindung teil- oder vollkreisförmig ausgeführt sein. Grundsätzlich ist der Zahnkranz mit einer Außenverzahnung mit außenliegenden oder nach außen gerichteten Zähnen ausgeführt.

Eine besonders zuverlässige Führung des flexiblen Abdeckelementes entlang der Zähne des Zahnkranzes wird nach einer Weiterbildung der Erfindung dadurch erzielt, dass das flexible Abdeckelement im Bereich des kämmenden Zahnrades über einen oder mehrere Führungsstege oder Führungsrollen um das mindestens eine Zahnrad herumgeführt ist. Entsprechende Führungseinrichtungen können auch in weiteren Abschnitten entlang des Zahnkranzes angeordnet sein, so dass das Abdeckelement ergänzend oder alternativ zu einer Andruckkraft auch über derartige Führungseinrichtungen, insbesondere Halteelemente, in seiner jeweiligen Abdeckposition gehalten ist.

Besonders bevorzugt ist es nach einer Weiterbildung der Erfindung, dass mindestens ein Führungssteg bzw. eine Führungsrolle als ein Spannelement zum Spannen des Abdeckelementes ausgebildet ist. Vorzugsweise kann hierzu der Führungssteg bzw. die Führungsrolle verstellbar gelagert und mittels einer Spanneinrichtung, etwa einer Feder oder eines Spannzylinders, gegen das Abdeckelement gedrückt sein. Ein Spannen des Abdeckelementes stellt eine zuverlässige Positionierung des Abdeckelementes sicher.

Eine besonders gute und zuverlässige Abdeckung der Zähne des Außenzahnkranzes wird nach einer Weiterentwicklung der Erfindung dadurch bewirkt, dass das flexible, längliche Abdeckelement eine Breite aufweist, welche mindestens der Breite der Zähne an dem Zahnkranz entspricht. Hierdurch wird eine zuverlässige Abdeckung des Zahnkranzes über deren Zahnbreite oder der Höhe des Zahnkranzes erzielt.

Die Zahnkranzanordnung kann grundsätzlich an jeder geeigneten Vorrichtung oder Maschine zum Einsatz kommen, insbesondere bei denen ein freiliegender Zahnkranz mit einem kämmenden Zahnrad gegeben ist. Besonders bevorzugt ist es nach einer Ausführung der Erfindung, dass eine Baumaschine, insbesondere eine Tiefbaumaschine, vorgesehen ist, wobei mindestens eine erfindungsgemäße Zahnkranzanordnung angeordnet ist. Insbesondere kann eine Baumaschine, insbesondere eine Tiefbaumaschine, mit einem fahrbaren Unterwagen und einem darauf drehbar gelagerten Oberwagen, vorgesehen sein. Insbesondere zum Verdrehen des Oberwagens gegenüber dem Unterwagen kann eine erfindungsgemäße Zahnkranzanordnung angeordnet sein. Der Zahnkranz, welcher etwa als ein ringförmiger Vollkreis ausgebildet ist, kann dabei entweder am Unterwagen oder am Oberwagen zentrisch zu einer Hochachse an der Baumaschine angeordnet sein.

Nach einer Weiterbildung der Erfindung betrifft diese eine Baumaschine mit:
- einem als Mäkler ausgebildeten Mast mit einer Mastlängsachse,
- einem Trägergerät mit einem Unterwagen und einem darauf angeordneten Oberwagen und
- einer Verstellvorrichtung, welche den Mast mit dem Trägergerät verbindet und durch welche der Mast gegenüber dem Trägergerät verstellbar ist,
- wobei die Verstellvorrichtung eine erste Schwenkeinrichtung mit einer ersten Schwenkachse aufweist, welche parallel zu der Mastlängsachse gerichtet ist, und der Mast mittels der ersten Schwenkeinrichtung um die erste Schwenkachse verschwenkbar ist,
- wobei die erste Schwenkeinrichtung die Zahnanordnung mit einem bogenförmigen Zahnkranz und einem von einem Drehmotor angetriebenen Zahnrad aufweist, welches zum stufenlosen Verschwenken des Mastes um die erste Schwenkachse mit dem Zahnkranz in Eingriff steht, und
- an dem Drehmotor eine Feststellbremse angeordnet ist, welche zum Feststellen des Mastes in einer Schwenkposition ausgebildet ist.

Ein erster Aspekt liegt dabei darin, dass die erste Schwenkeinrichtung zum Verschwenken des Mastes um die parallel zur Mastlängsachse gerichtete erste Schwenkachse einen bogenförmigen Zahnkranz und ein damit kämmendes Zahnrad aufweist. Das Zahnrad kann mittels eines Drehmotors beliebig um eine gewünschte Anzahl von Umdrehungen oder nur in einem definierten Drehwinkelbereich angetrieben werden. Hierdurch wird ein stufenloses Verschwenken des Mastes um die erste Schwenkachse erzielt. Der bogenförmige Zahnkranz kann teilkreisförmig oder vollkreisförmig ausgebildet sein. Er kann als ein Außenzahnkranz mit außenliegenden Zähnen ausgebildet sein.

Ein weiterer Aspekt liegt darin, an dem Drehmotor eine Feststellbremse anzuordnen, durch welche der Mast in seiner Schwenkposition feststellbar ist. Durch die Feststellbremse kann insbesondere eine Bewegung einer Motorwelle oder des Zahnrades, insbesondere eines Zahnradritzels, am Drehmotor blockiert werden. Somit wird auch eine Bewegung des Zahnkranzes blockiert, so dass hierdurch die Schwenkeinrichtung festgestellt und auch der Mast in einer beliebigen Verstellposition festgelegt ist.

Insgesamt kann so ein beliebiges stufenloses Verschwenken des Mastes um die erste Schwenkachse und ein stufenloses Feststellen des Mastes in einer beliebigen Schwenkposition erzielt werden.

Grundsätzlich kann der Drehantrieb mit dem Zahnrad an dem Mast angeordnet sein, während der bogenförmige Zahnkranz feststehend zur ersten Schwenkachse zur Seite des Trägergerätes angeordnet ist. Eine besonders bevorzugte und mechanisch einfache Ausführungsform der Erfindung besteht darin, dass der bogenförmige Zahnkranz drehfest mit dem Mast verbunden ist und dass der Drehmotor beabstandet zum Mast zur Seite des Trägergerätes angeordnet ist. Der bogenförmige Zahnkranz kann sich so mit dem Mast um die erste Schwenkachse in den gewünschten Schwenkbereich bewegen. Der Drehmotor hingegen ist feststehend zur ersten Schwenkachse an dem Trägergerät oder einem weiteren Teil der Verstellvorrichtung zur Seite des Trägergerätes hin angeordnet. Hierdurch wird ein besonders stabiler und robuster Aufbau der ersten Schwenkeinrichtung erzielt.

Nach einer Weiterbildung der Erfindung ist es bevorzugt, dass das Zahnrad von dem Drehmotor direkt oder über ein Getriebe, insbesondere ein Untersetzungsgetriebe, angetrieben ist.

Der Drehmotor kann als ein Hydraulikmotor oder ein Elektromotor ausgebildet sein.

Grundsätzlich kann die Verstellvorrichtung zum Verstellen des Mastes noch eine oder mehrere weitere Schwenk- oder Bewegungseinrichtungen umfassen, so dass der Mast um ein oder mehrere weitere Schwenk- bzw. Bewegungsachsen relativ zum Trägergerät verstellbar ist. Insbesondere können eine oder mehrere Schwenkeinrichtungen zum Neigen des Mastes gegenüber einer Vertikalen angeordnet sein. Weiterhin ist es möglich, dass eine oder mehrere weitere Schwenkeinrichtungen vorgesehen sind, welche durch Verschwenken um eine oder mehrere horizontale Schwenkachse einen horizontalen Abstand des Mastes zum Trägergerät verändern können. Zum Verschwenken können weitere Antriebe, insbesondere Stellzylinder, vorzugsweise Hydraulikzylinder, oder weitere Drehmotoren angeordnet sein.

Zum Verstellen des Mastes im Raum können weitere Stellmechanismen an der Tiefbaumaschine vorgesehen sein. Besonders vorteilhaft ist es nach einer Ausführungsform der Erfindung, dass der Oberwagen drehbar um eine Hochachse auf dem Unterwagen gelagert ist. Somit kann der Oberwagen mit dem Mast um bis zu 360° und mehr um die Hochachse verdreht werden.

Das Trägergerät mit dem Unterwagen kann grundsätzlich in jeder geeigneten Weise bewegbar sein. Es ist bevorzugt, dass der Unterwagen fahrbar, insbesondere mit einem Raupenfahrwerk, ausgebildet ist.

Die Baumaschine ist vorzugsweise als eine Tiefbaumaschine für den Spezialtiefbau ausgebildet. Besonders vorteilhaft ist es nach einer Weiterbildung der Erfindung, dass die Tiefbaumaschine als ein Bohrgerät, eine Schlitzwandfräsvorrichtung, ein Rammgerät oder ein Rüttlergerät ausgebildet ist. Ein Bohrgerät kann insbesondere zum Erstellen von Bohrungen im Boden, insbesondere für Gründungspfähle, ausgeführt sein. Eine Schlitzwandfräsvorrichtung kann eine Schlitzwandfräse mit vorzugsweise zwei Paaren von Fräsrädern umfassen, wobei die Schlitzwandfräse mittels einer Führungsstange entlang des Mäklers linear geführt ist. Ein Rammgerät kann mit einem Rammhammer zum Ausführen von Rammschlägen auf in den Boden einzutreibende Bohlen oder Pfähle ausgebildet sein. Bei einem Rüttlergerät kann eine Rüttlereinheit angeordnet sein, mit welcher etwa Bohlen oder Pfähle unter Erzeugung von Schwingungen in den Boden eingetrieben oder hieraus gezogen werden können.

Die Erfindung wird nachfolgend anhand eines bevorzugten Ausführungsbeispieles weiter beschrieben, welches schematisch in den Zeichnungen darstellt ist. In den Zeichnungen zeigen:
- Fig. 1: eine perspektivische schematische Ansicht einer erfindungsgemäßen Tiefbaumaschine;
- Fig. 2: eine vergrößerte perspektivische Detailansicht zu der Tiefbaumaschine von Fig. 1 zu einer Verstellvorrichtung;
- Fig. 3: eine vergrößerte perspektivische Detailansicht zu der Tiefbaumaschine von Fig. 2 zu einer Schwenkeinrichtung nach der Erfindung;
- Fig. 4: eine vergrößerte perspektivische Detailansicht zu der Schwenkeinrichtung nach der Erfindung;
- Fig. 5: eine Seitenansicht eines Teils der Verstellvorrichtung mit der Schwenkeinrichtung nach der Erfindung;
- Fig. 6: eine Draufsicht auf die Schwenkeinrichtung nach der Erfindung gemäß dem Schnitt A-A in Fig.5 in einer mittleren Schwenkposition;
- Fig. 7: eine Draufsicht auf die Schwenkeinrichtung nach der Erfindung entsprechend Fig. 6 in einer anderen Schwenkposition;
- Fig. 8: eine Draufsicht auf die Schwenkeinrichtung nach der Erfindung entsprechend Fig. 6 und Fig. 7 in einer weiteren Schwenkposition;
- Fig. 9: eine perspektivische teilweise geschnittene Darstellung eines Teils der Verstellvorrichtung mit einer teilweise geschnittenen Schwenkeinrichtung nach der Erfindung;
- Fig. 10: eine vergrößerte Detailansicht des Ausschnitts A von Fig. 9;

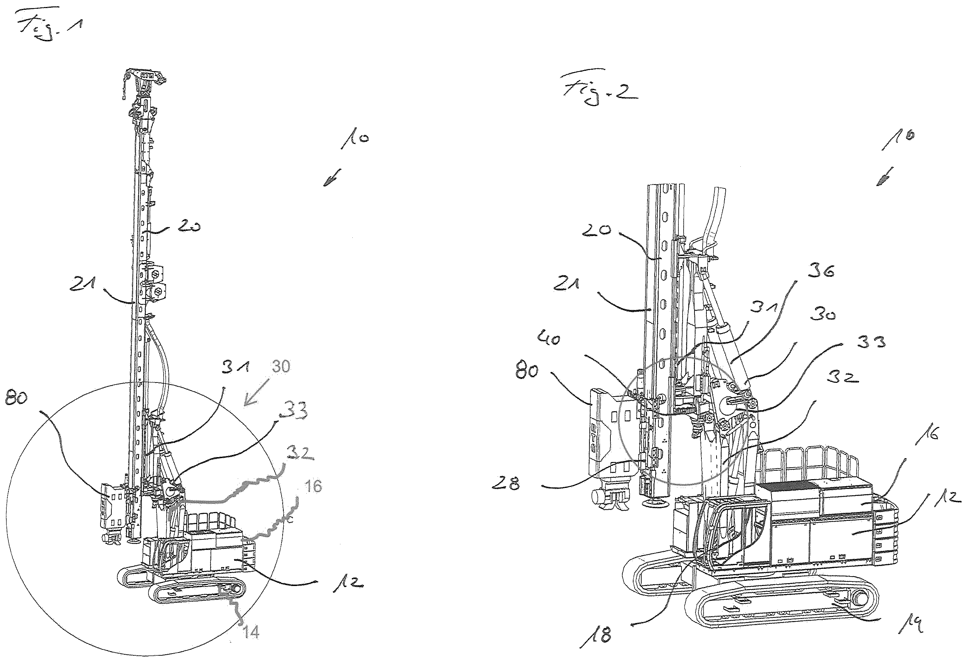

Eine erfindungsgemäße Tiefbaumaschine 10 gemäß den Figuren 1 bis 3 weist ein Trägergerät 12 mit einem Unterwagen 14 und einem Oberwagen 16 auf. Der Unterwagen 14 kann fahrbar insbesondere mit einem Raupenfahrwerk ausgebildet sein.

Auf dem Unterwagen 14 kann der Oberwagen 16 drehbar um eine Hochachse gelagert sein. An dem Oberwagen 16 kann eine Bedienkabine 18 für einen Maschinenbediener angeordnet sein. In der Bedienkabine kann insbesondere eine Steuereinrichtung zum Steuern der Tiefbaumaschine 10 untergebracht sein. An dem Trägergerät 12 ist ein im Betrieb aufrechter Mast 20 über eine Verstellvorrichtung 30 verstellbar gelagert.

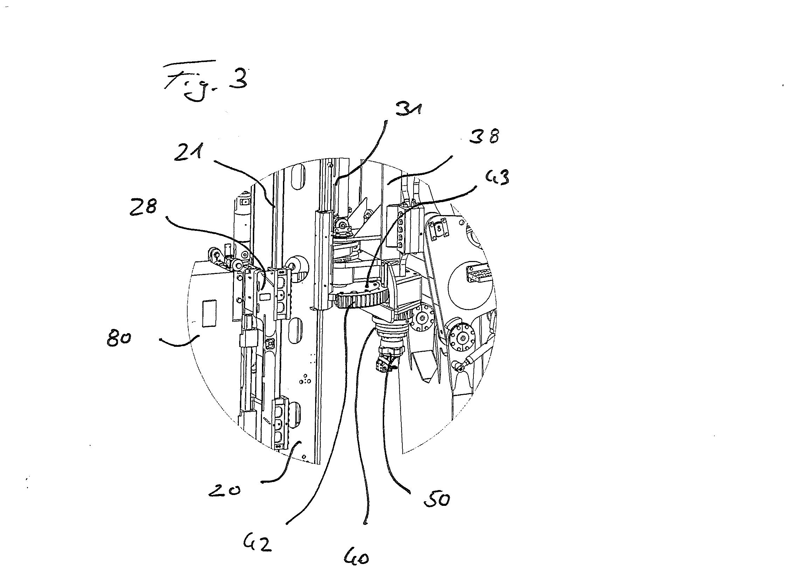

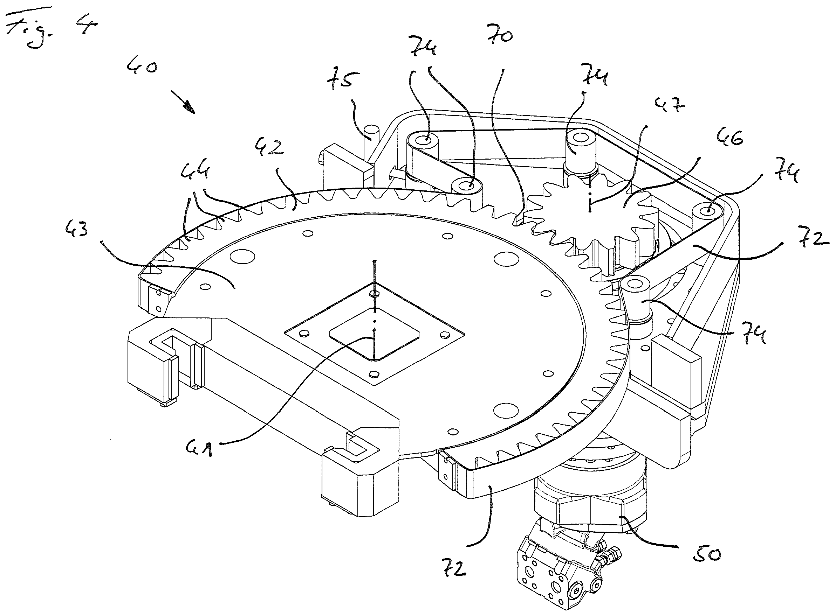

Die Verstellvorrichtung 30 kann eine balkenartige Halteeinrichtung 31 aufweisen, entlang welcher der Mast 20 in einer Mastlängsrichtung um einen gewissen Betrag verschiebbar ist. Die Verstellvorrichtung 30 weist weiterhin eine in Fig. 3 näher dargestellte erste Schwenkeinrichtung 40 auf, welche an einem unteren Ende der Halteeinrichtung 31 angeordnet sein kann. Die erste Schwenkeinrichtung 40 ist zum stufenlosen Verschwenken des Mastes 20 um eine erste Schwenkachse ausgebildet, wie nachfolgend im Zusammenhang mit den Figuren 4 bis 8 noch weiter erläutert wird.

Gemäß dem dargestellten Ausführungsbeispiel kann die Verstellvorrichtung 30 eine zweite Schwenkeinrichtung 32 aufweisen, welche im dargestellten Ausführungsbeispiel zwei schwenkbare Träger umfasst. Die Träger können in einer ParallelogrammAnordnung positioniert sein und können in ihrem unteren Bereich schwenkbar um im Wesentlichen horizontal gerichtete Schwenkachsen schwenkbar an dem Trägergerät 12 angelenkt sein. Ein oberes Ende der beiden Schwenkträger kann in grundsätzlich bekannterweise an einem Lagerbock 33 schwenkbar um ebenfalls im Wesentlichen horizontal gerichtete Schwenkachsen gelagert sein. An dem Lagerbock 33 kann die Halteeinrichtung 31 mit dem Mast 20 schwenkbar angelenkt sein.

Über eine dritte Schwenkeinrichtung 36 kann ein Trägerteil 38 mittels eines oder vorzugsweise zwei Hydraulikzylindern und damit der Mast 20 um eine im Wesentlichen horizontale weitere Schwenkachse an dem Lagerbock 33 gegenüber einer Vertikalen geneigt werden. Grundsätzlich können noch weitere oder andere Schwenk- und Bewegungseinrichtungen zum Bilden der Verstellvorrichtung 30 vorgesehen sein, um den Mast 20 relativ gegenüber dem Trägergerät 12 verstellen zu können.

Der Mast 20 ist als ein Mäkler mit einer Linearführung 21 an einem vom Trägergerät 12 weg gerichteten Vorderbereich des Mastes 20 ausgebildet. Entlang des Mastes 20 mit der Linearführung 21 kann ein Mastschlitten 28 entlang der Mastlängsrichtung mittels einer Verfahreinrichtung verfahrbar angeordnet sein. Die Verfahreinrichtung, welche eine oder mehrere Seilwinden und/oder Stellzylinder aufweisen kann, ist - wie auch im Betrieb notwendige Energie- und Versorgungsleitungen - in den Figuren nicht dargestellt.

Mit dem Mastschlitten 28 kann eine Tiefbauvorrichtung 80 in Mastlängsrichtung verfahren werden. Im dargestellten Ausführungsbeispiel ist die Tiefbauvorrichtung 80 als eine Rüttlereinheit mit einer Spannzange zum Halten und Eintreiben oder Ziehen von Spundwandbohlen ausgeführt. Die Tiefbauvorrichtung 80 ist mit dem Mastschlitten 28 verbunden.

Die erste Schwenkeinrichtung 40, welche an einem unteren Ende des balkenartigen Trägerteiles 38 angebracht sein kann, wird nachfolgend in Zusammenhang mit den Figuren 4 bis 8 näher beschrieben.

Die erste Schwenkeinrichtung 40 umfasst eine Zahnkranzanordnung 70 mit einem bogenförmigen Zahnkranz 42 mit außenliegenden Zähnen 44 und mindestens einem Zahnrad 46, welches um eine Zahnradmittenachse 47 drehbar ist und mit dem Zahnkranz 42 in kämmenden Eingriff steht. Der Zahnkranz 42, welcher gemäß dem Ausführungsbeispiel teilkreisförmig gestaltet sein kann, ist an einer Halterung 43 befestigt. Bei entsprechend verfügbarem Bauraum kann der Zahnkranz 42 auch durchgehend, also um 360°, ausgebildet sein. Dies kann fertigungstechnische Vorteile haben. Die Halterung 43 kann direkt mit dem Mast 20 oder mit der Halteeinrichtung 31 drehfest verbunden sein. Die längliche Halteeinrichtung 31 kann etwa parallel zum balkenartigen Trägerteil 38 angeordnet und schwenkbar dazu gelagert sein.

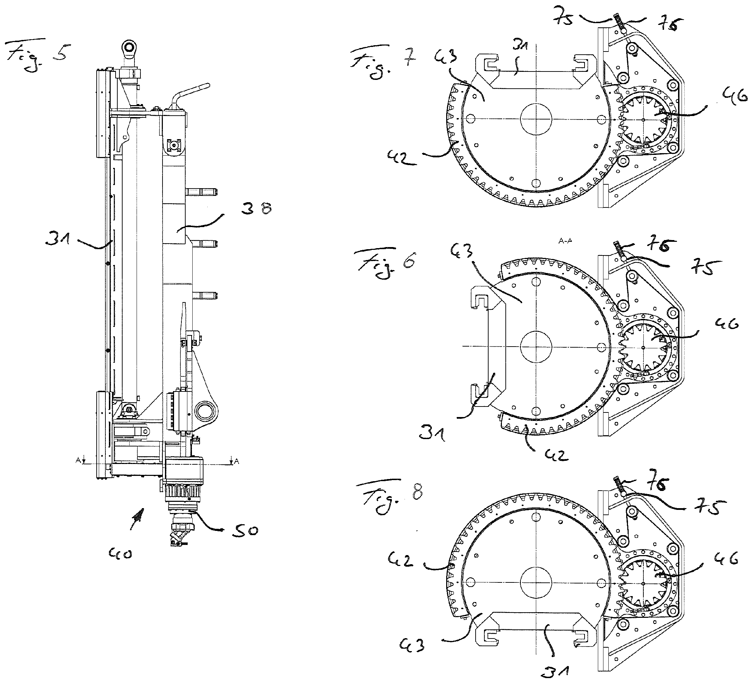

Zum stufenlosen Verschwenken des Mastes 20 um eine erste Schwenkachse 41, welche insbesondere eine Mittenachse des Zahnkranzes 42 sein kann, wird das Zahnrad 46 drehend von einem Drehmotor 50 angetrieben. Der Drehmotor 50 kann an einem zum Trägergerät 12 gerichteten Teil der Verstellvorrichtung 30 angeordnet sein, wie in den Figuren 4 und 5 näher dargestellt ist.

Die Zahnkranzanordnung 70 weist ein flexibles, längliches Abdeckelement 72 auf, welches auf dem Zahnkranz 42 entlang den außenliegenden Zähnen 44 angeordnet ist. Im Bereich des kämmenden Zahnrades 46 ist das flexible Abdeckelement 72 über mehrere Führungsstege oder Führungsrollen 74 um das mindestens eine Zahnrad 46 herumgeführt. In Fig. 3 ist das Abdeckelement 72 aus Gründen der Übersichtlichkeit weggelassen. Mindestens ein Führungssteg bzw. eine Führungsrolle 74 kann als ein Spannelement zum Spannen des Abdeckelementes 72 ausgebildet ist. So kann etwa mindestens eine Führungsrolle 74 verstellbar gelagert und mittels einer Spanneinrichtung 75, welche etwa gemäß den Figuren 6 bis 8 eine Feder 76 aufweisen kann, gegen das Abdeckelement 72 gedrückt sein.

An seinen beiden Enden kann das flexible, längliche Abdeckelement 72, welches gemäß dem Ausführungsbeispiel als ein durchgehendes elastisches Band, insbesondere aus oder mit einem elastischen Kunststoffmaterial, gebildet ist, an den Enden des bogenförmigen Zahnkranzes 42 befestigt sein. Durch die Ausgestaltung und Führung des flexiblen Abdeckelementes 72 liegt dieses an den außenliegenden Zähnen 44 des Zahnkranzes 42 auf und kann auf die Zahnköpfe der Zähne 44 mit einer gewissen Anlagekraft angedrückt werden. Bei der Zahnkranzanordnung 70 gemäß Fig. 4 kann ein einfaches Fettschmieren mittels eines Pinsels, durch ein Sprühfett oder eine Zentralschmierung von oben oder unten erfolgen, wobei die Umfangsseite der Zähne 44 zum Schutz gegen Verletzung und Verschmutzung abgedeckt ist.

Zusätzlich können an der Oberseite und/oder der Unterseite des Zahnkranzes 42 nicht dargestellte ring- oder scheibenförmige Abdeckplatten angeordnet sein, welche die Zähne 44 auch von oben bzw. unten abdecken können. Bei einer solchen Zahnkranzanordnung 70 kann eine weitgehende oder sogar vollständige Abdeckung der Zähne 44 des Zahnkranzes 42 erreicht werden, was die Gefahr von Verletzungen von Bedienpersonal und von Verschmutzung weiter verringert. Ein Schmieren mit Fett kann dabei über das Zahnrad 46 und/oder definierte Zuführstellen für Fett erfolgen.

Die Funktionsweise der ersten Schwenkeinrichtung 40 und ein stufenloses Verstellen des Mastes werden weiter im Zusammenhang mit den Figuren 5 bis 8 erläutert.

In den Figuren 5 und 6 ist die erste Schwenkeinrichtung in einer Mitten- oder Ausgangsposition gezeigt. Durch drehendes Antreiben des Zahnrades 46 über den Drehmotor 50 kann der Zahnkranz 42 mit der Halterung 43, welche drehfest mit dem Mast 20 verbunden ist, stufenlos im Uhrzeigersinn um bis zu 90° bis zu einer ersten Endposition gemäß Fig. 7 und entgegen dem Uhrzeigersinn um bis zu 90° bis zu einer zweiten Endposition gemäß Fig. 8 verschwenkt werden. Andere, insbesondere größere Schwenkbereiche sind möglich.

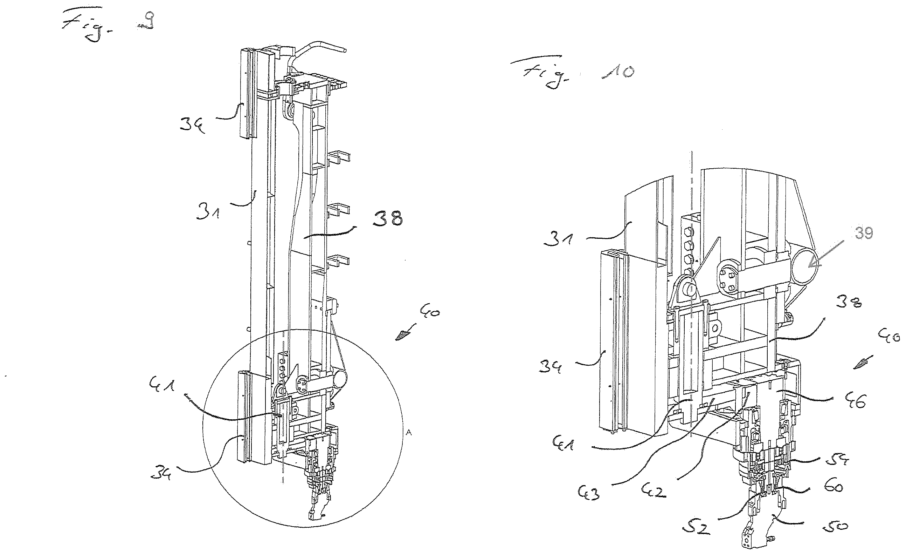

Der Aufbau und die Funktionsweise der ersten Schwenkeinrichtung 40 werden weiter im Zusammenhang mit den Figuren 9 und 10 erläutert.

In Fig. 9 ist die balkenartige Halteeinrichtung 31 als Teil der Verstellvorrichtung 30 dargestellt. An einer Vorderseite der Halteeinrichtung 31 kann der Mast 20, welcher in den Figuren 9 und 10 nicht gezeigt ist, in Mastlängsrichtung mittels klammerartigen Führungseinrichtungen 34 verschiebbar gelagert sein. Der Mast 20 ist drehfest mit der Halteeinrichtung 31 verbunden. Die Halteeinrichtung 31 ist wiederum schwenkbar um eine erste Schwenkachse 41, welche parallel zur Mastlängsrichtung ist und durch einen Schwenkbolzen gebildet sein kann, an einem balkenartigen Trägerteil 38 gelagert, welches Teil der weiteren Verstellvorrichtung 30 ist, welche den Mast 20 mit dem Trägergerät 12 verbindet. Über ein Lagerauge 39 kann das Trägerteil 38 etwa unter Ausbildung einer horizontalen Schwenkachse an dem nicht dargestellten Lagerbock 33 der Verstellvorrichtung 30 schwenkbar angelenkt sein.

Zum Verschwenken der Halteeinrichtung 31 mit dem Mast 20 gegenüber dem Trägerteil 38 der Verstellvorrichtung 30 ist in einem unten Bereich der Halteeinrichtung 31 die erste Schwenkeinrichtung 40 angeordnet. An einem unteren Ende der Halteeinrichtung 31 kann über eine platten- oder scheibenförmige Halterung 43 der Zahnkranz 42 drehfest mit der Halteeinrichtung 31 verbunden sein. Eine Mittenachse des bogenförmigen Zahnkranzes 42 kann dabei mit der ersten Schwenkachse 41 der ersten Schwenkeinrichtung 40 zusammenfallen.

Ein mit dem Zahnkranz 42 kämmendes Zahnrad 46 kann vorzugsweise über ein Getriebe 54, welches als ein mehrstufiges Planetengetriebe ausgebildet sein kann, von einem Drehmotor 50 mit einer Motorwelle 52 angetrieben werden. Der Drehmotor 50, welcher in dem dargestellten Ausführungsbeispiel als ein Hydraulikmotor ausgebildet sein kann, ist drehfest an dem Trägerteil 38 angebracht. Über ein definiertes Antreiben des Drehmotors 50 kann durch den kämmenden Eingriff des Zahnrades 46 mit dem Zahnkranz 42 die Halteeinrichtung 31 mit dem Mast 20 stufenlos um die erste Schwenkachse 41 verschwenkt werden. Es kann ein Verschwenkungsbereich von einer mittigen Ausgangstellung etwa zwischen +90° und -90° erreicht werden.

Für ein Feststellen der balkenförmigen Halteeinrichtung 31 mit dem daran angeordneten Mast 20 weist die erste Schwenkeinrichtung 40 eine Feststellbremse 60 im Bereich des Drehmotors 50 auf. In dem dargestellten Ausführungsbeispiel ist die schematisch dargestellte Feststellbremse 60 zwischen dem Drehmotor 50 und dem Getriebe 54 angeordnet. Die Feststellbremse 60 kann mehrere Bremsscheiben aufweisen, welche durch eine Federkraft zum Feststellen axial gegeneinandergedrückt sowie durch eine nicht näher gezeigte Stelleinrichtung entgegen der Federkraft gelöst werden können. Durch eine Feststellbremse 60 im Bereich des Drehmotors 50 kann in Kombination mit dem Getriebe 54 und der Verzahnung zwischen dem Zahnkranz 42 und dem Zahnrad 46 mit einem relativ geringen Bauraum eine ausreichend hohe Feststellkraft zum Feststellen des Mastes 20 im Baubetrieb bewirkt werden. Insbesondere kann die Position des Mastes 20 in jeder eingestellten Schwenkposition festgestellt werden.

## Patentansprüche

1. Zahnkranzanordnung, insbesondere für eine Baumaschine, mit
- einem bogenförmigen Zahnkranz (42) mit außenliegenden Zähnen (44) und
- mindestens einem Zahnrad (46), welches um eine Zahnradmittenachse (47) drehbar ist und mit dem Zahnkranz (42) in kämmenden Eingriff steht,
**dadurch gekennzeichnet,**
- **dass** ein flexibles, längliches Abdeckelement (72) auf dem Zahnkranz (42) entlang den außenliegenden Zähnen (44) angeordnet ist und
- **dass** im Bereich des kämmenden Zahnrades (46) das flexible Abdeckelement (72) um das mindestens eine Zahnrad (46) herumgeführt ist.

2. Zahnkranzanordnung nach Anspruch 1,
**dadurch gekennzeichnet,**
**dass** das flexible Abdeckelement (72) an den außenliegenden Zähnen (44) des Zahnkranzes (42) aufliegt und daran mit einer bestimmten Anlagekraft angedrückt ist.

3. Zahnkranzanordnung nach Anspruch 1 oder 2,
**dadurch gekennzeichnet,**
**dass** das flexible Abdeckelement (72) elastisch, insbesondere aus oder mit einem elastischen Kunststoffmaterial, gebildet ist.

4. Zahnkranzanordnung nach einem der Ansprüche 1 bis 3,
**dadurch gekennzeichnet,**
**dass** das flexible Abdeckelement (72) als ein durchgehendes Band oder ein Band mit gelenkigen Bandgliedern gebildet ist.

5. Zahnkranzanordnung nach einem der Ansprüche 1 bis 4,
**dadurch gekennzeichnet,**
**dass** der Zahnkranz (42) teil- oder vollkreisförmig ausgebildet ist.

6. Zahnkranzanordnung nach einem der Ansprüche 1 bis 5,
**dadurch gekennzeichnet,**
**dass** das flexible Abdeckelement (72) im Bereich des kämmenden Zahnrades (46) über ein oder mehrere Führungsstege oder Führungsrollen (74) um das mindestens eine Zahnrad (46) herumgeführt ist.

7. Zahnkranzanordnung nach Anspruch 6,
**dadurch gekennzeichnet,**
**dass** mindestens ein Führungssteg beziehungsweise eine Führungsrolle (74) als ein Spannelement zum Spannen des flexiblen Abdeckelementes (72) ausgebildet ist.

8. Zahnkranzanordnung nach einem der Ansprüche 1 bis 7,
**dadurch gekennzeichnet,**
**dass** das flexible, längliche Abdeckelement (72) eine Breite aufweist, welche etwa der Breite der Zähne (44) an dem Zahnkranz (42) entspricht.

9. Baumaschine, insbesondere Tiefbaumaschine (10),
**dadurch gekennzeichnet,**
**dass** mindestens eine Zahnkranzanordnung (70) nach einem der Ansprüche 1 bis 8 angeordnet ist.

10. Baumaschine nach Anspruch 9,
mit:
- einem als Mäkler ausgebildeten Mast (20) mit einer Mastlängsachse (22),
- einem Trägergerät (12) mit einem Unterwagen (14) und einem darauf angeordneten Oberwagen (16) und
- einer Verstellvorrichtung (30), welche den Mast (20) mit dem Trägergerät (12) verbindet und durch welche der Mast (20) gegenüber dem Trägergerät (12) verstellbar ist,
- wobei die Verstellvorrichtung (30) eine erste Schwenkeinrichtung (40) mit einer ersten Schwenkachse (41) aufweist, welche parallel zu der Mastlängsachse (22) gerichtet ist, und der Mast (20) mittels der ersten Schwenkeinrichtung (40) um die erste Schwenkachse (41) verschwenkbar ist,
- wobei die erste Schwenkeinrichtung (40) die Zahnanordnung (70) mit einem bogenförmigen Zahnkranz (42) und einem von einem Drehmotor (50) angetriebenen Zahnrad (46) aufweist, welches zum stufenlosen Verschwenken des Mastes (20) um die erste Schwenkachse (41) mit dem Zahnkranz (42) in Eingriff steht, und
- an dem Drehmotor (50) eine Feststellbremse (60) angeordnet ist, welche zum Feststellen des Mastes (20) in einer Schwenkposition ausgebildet ist.

11. Baumaschine nach Anspruche 9 oder 10,
**dadurch gekennzeichnet,**
**dass** diese als ein Bohrgerät, eine Schlitzwandfräsvorrichtung, ein Rammgerät oder ein Rüttlergerät ausgebildet ist.

## Geänderte Patentansprüche

### Geänderte Patentansprüche gemäss Regel 137(2) EPÜ.

1. Baumaschine, insbesondere Tiefbaumaschine (10), mit
- einem als Mäkler ausgebildeten Mast (20) mit einer Mastlängsachse (22),
- einem Trägergerät (12) mit einem Unterwagen (14) und einem darauf angeordneten Oberwagen (16) und
- einer Verstellvorrichtung (30), welche den Mast (20) mit dem Trägergerät (12) verbindet und durch welche der Mast (20) gegenüber dem Trägergerät (12) verstellbar ist,
- wobei die Verstellvorrichtung (30) eine erste Schwenkeinrichtung (40) mit einer ersten Schwenkachse (41) aufweist, welche parallel zu der Mastlängsachse (22) gerichtet ist, und der Mast (20) mittels der ersten Schwenkeinrichtung (40) um die erste Schwenkachse (41) verschwenkbar ist,
**dadurch gekennzeichnet,**
- **dass** die erste Schwenkeinrichtung (40) eine Zahnanordnung (70) mit einem bogenförmigen Zahnkranz (42) mit außenliegenden Zähnen (44) und einem von einem Drehmotor (50) angetriebenen Zahnrad (46) aufweist, welches um eine Zahnradmittenachse (47) drehbar ist und zum stufenlosen Verschwenken des Mastes (20) um die erste Schwenkachse (41) mit dem Zahnkranz (42) in kämmenden Eingriff steht,
- **dass** ein flexibles, längliches Abdeckelement (72) auf dem Zahnkranz (42) entlang den außenliegenden Zähnen (44) angeordnet ist und
- **dass** im Bereich des kämmenden Zahnrades (46) das flexible Abdeckelement (72) um das Zahnrad (46) herumgeführt ist.

2. Baumaschine nach Anspruch 1,
**dadurch gekennzeichnet,**
**dass** das flexible Abdeckelement (72) an den außenliegenden Zähnen (44) des Zahnkranzes (42) aufliegt und daran mit einer bestimmten Anlagekraft angedrückt ist.

3. Baumaschine nach Anspruch 1 oder 2,
**dadurch gekennzeichnet,**
**dass** das flexible Abdeckelement (72) elastisch, insbesondere aus oder mit einem elastischen Kunststoffmaterial, gebildet ist.

4. Baumaschine nach einem der Ansprüche 1 bis 3,
**dadurch gekennzeichnet,**
**dass** das flexible Abdeckelement (72) als ein durchgehendes Band oder ein Band mit gelenkigen Bandgliedern gebildet ist.

5. Baumaschine nach einem der Ansprüche 1 bis 4,
**dadurch gekennzeichnet,**
**dass** der Zahnkranz (42) teil- oder vollkreisförmig ausgebildet ist.

6. Baumaschine nach einem der Ansprüche 1 bis 5,
**dadurch gekennzeichnet,**
**dass** das flexible Abdeckelement (72) im Bereich des kämmenden Zahnrades (46) über ein oder mehrere Führungsstege oder Führungsrollen (74) um das mindestens eine Zahnrad (46) herumgeführt ist.

7. Baumaschine nach Anspruch 6,
**dadurch gekennzeichnet,**
**dass** mindestens ein Führungssteg beziehungsweise eine Führungsrolle (74) als ein Spannelement zum Spannen des flexiblen Abdeckelementes (72) ausgebildet ist.

8. Baumaschine nach einem der Ansprüche 1 bis 7,
**dadurch gekennzeichnet,**
**dass** das flexible, längliche Abdeckelement (72) eine Breite aufweist, welche etwa der Breite der Zähne (44) an dem Zahnkranz (42) entspricht.

9. Baumaschine nach einem der Ansprüche 1 bis 8,
**dadurch gekennzeichnet,**
- **dass** an dem Drehmotor (50) eine Feststellbremse (60) angeordnet ist, welche zum Feststellen des Mastes (20) in einer Schwenkposition ausgebildet ist.

10. Baumaschine nach einem der Ansprüche 1 bis 9,
**dadurch gekennzeichnet,**
**dass** diese als ein Bohrgerät, eine Schlitzwandfräsvorrichtung, ein Rammgerät oder ein Rüttlergerät ausgebildet ist.
